# EUROPÄISCHE PATENTSCHRIFT

(11) **EP 3 022 097 B1**
(45) Veröffentlichungstag und Bekanntmachung des Hinweises auf die Patenterteilung: **19.04.2017**
(21) Anmeldenummer: 14728835.1
(22) Anmeldetag: 04.06.2014
(51) Int. Cl.: B60T 7/10, B60T 15/02, B60T 15/04, B60T 17/22, G05G 1/04

(54) **HANDBREMSVENTIL FÜR BREMSANLAGEN VON PNEUMATISCH GEBREMSTEN KRAFTFAHRZEUGEN**
HAND BRAKE VALVE FOR BRAKING SYSTEMS OF PNEUMATICALLY BRAKED MOTOR VEHICLES
VANNE DE FREIN À MAIN POUR SYSTÈMES DE FREINAGE DE VÉHICULES À MOTEUR À FREINAGE PNEUMATIQUE

(30) Priorität: 15.07.2013 DE 102013011787
(43) Veröffentlichungstag der Anmeldung: 25.05.2016
(73) Patentinhaber: WABCO GmbH, 30453 Hannover (DE)
(72) Erfinder: LICHTENBERG, Wolfgang, 30457 Hannover (DE)
(74) Vertreter: Lauerwald, Jörg
(86) Internationale Anmeldenummer: PCT/EP2014/001515
(87) Internationale Veröffentlichungsnummer: WO 2015/007355

(56) Entgegenhaltungen:
- EP-A2- 2 388 169
- DE-A1- 3 346 018

## Beschreibung

Die Erfindung betrifft ein Handbremsventil für Bremsanlagen von pneumatisch gebremsten Kraftfahrzeugen mit dem Merkmal des Oberbegriffs des Patentanspruchs 1.

Derlei Handbremsventile werden für pneumatisch gebremste Kraftfahrzeuge, insbesondere Nutzkraftfahrzeuge, aber auch für landwirtschaftlich genutzte Zugfahrzeuge, benötigt, um das Kraftfahrzeug und gegebenenfalls seinen Anhänger in einer Parkposition rollsicher abstellen zu können. Ein mit einem Kipphebel verbundener Steuerkörper, meist in der Form einer Nockenscheibe, betätigt bei entsprechender Stellung des Kipphebels den eigentlichen Ventilmechanismus des Handbremsventils. Das Betätigen des Ventilmechanismus sorgt dafür, dass Feststellbremszylinder entlüftet werden, wodurch Bremsen des Fahrzeugs oder seines Anhängers zugespannt werden.

In der Parkposition wird üblicherweise der Kipphebel in einer Schaltkulisse arretiert, so dass der Kipphebel nicht von alleine in seine Lösestellung gelangen kann. Um die Handbremse zu lösen, ist es bei üblichen Handbremsventilen nötig, dass der Fahrer einen Handgriff des Kipphebels hochzieht, wodurch ein Rastelement aus seiner Rastnut radial nach oben gleitet und in die Lösestellung bewegt werden kann. Verschiedene Lösungen, die sich mit der Kulisse, dem Hebel und dem Arretieren des Kipphebels beschäftigen, sind beispielsweise aus der DE 27 12 945 C2 und der EP 0 171 569 B1 bekannt. Es ist auch bereits bekannt, am oder im Hebelgehäuse des Handbremsventils ein elektrisches Schaltelement vorzusehen, dass bei verrasteter Position des Kipphebels ein am Armaturenbrett angebrachtes Leuchtmittel schaltet, so dass der Fahrer ein optisches Signal erhält, wenn das Handbremsventil in seiner Raststellung befindlich ist. Ein derartiges Handbremsventil wird beispielsweise von der Anmelderin unter der Teilenummer 961 723 118 0 vertrieben und hat sich seit langem bewährt. Es kann jedoch in seltenen Ausnahmefällen das Problem auftreten, dass der Kipphebel zwar scheinbar verrastet erscheint, was dem Fahrer auch durch das Aufleuchten der durch das Schaltelement geschalteten Lampe angezeigt wird. Jedoch kann diese Sicherheit trügerisch sein, nämlich dann, wenn sich der Kipphebel in einer Zwischenstellung befindet, also wenn der Kipphebel nicht vollständig eingerastet verharrt, für den Fahrer aber als eingerastet erscheint. Solche Stellungen sind bei derartigen Handbremsventilen als sogenannte "Zahn-auf-Zahn-Stellung" bekannt. Hier kann es nun selbst durch leichteste Erschütterungen, beispielsweise durch Zuschlagen der Fahrertür, dazu kommen, dass der Kipphebel aus dieser gefährlichen Zwischenstellung heraus und in seine Lösestellung rutscht. Die Bremse ist nun gelöst und das Fahrzeug kann ins Rollen geraten, was schwerste Unfälle nach sich ziehen kann.

Mit diesem Problem hat sich bereits die DE 33 46 018 A1 beschäftigt. Diese Schrift beschreibt eine Lösung des Problems, bei der das elektrische Schaltelement erst dann wirksam, d. h., eingeschaltet wird, wenn das Rastelement tatsächlich seine Rastposition eingenommen hat. Bei der Lösung gemäß der DE 33 46 018 A1 ist das als Stößelschalter, Rollenschalter oder Reed-Kontakt ausgebildeter Schaltelement direkt mit dem als Nokkenscheibe ausgebildeten Steuerkörper verbunden. Hierdurch wird ein Handbremshebel geschaffen, der nur im wirklich verrasteten Zustand das Schaltelement auslöst, wodurch erst im vollständig verriegeltem Zustand eine Lampe aufleuchtet, welche dem Fahrer signalisiert, dass eine wirksame Verrastung stattgefunden hat. Dennoch bietet auch diese Lösung noch Raum für Verbesserungen. Als nachteilig an der zuvor beschriebenen Lösung wird angesehen, dass das Schaltelement im Inneren des Hebelgehäuses angeordnet und mit dem Steuerkörper verbunden ist. Eine Montage oder ein Austauschen des Schaltelements bei einem Defekt wird hierdurch erschwert, zu dem werden die eingangs beschriebenen Handbremsventile immer kompakter, so dass in deren Inneren kaum mehr Platz für zusätzliche Bauteile ist.

Der Erfindung liegt daher die Aufgabe zu Grunde, ein Handbremsventil der eingangs geschilderten Art dahingehend zu verbessern, dass ein zuverlässig den Rastzustand des Kipphebels anzeigendes Schaltelement so mit dem Handbremsventil verbunden ist, dass eine einfache Montage und ein Teileaustausch möglich ist.

Diese Aufgabe wird mit einem Handbremsventil mit den Merkmalen des Patentanspruchs 1 gelöst.

Auf überraschend einfache Art und Weise wird die Aufgabe dadurch gelöst, dass ein Handbremsventil für Bremsanlagen von pneumatisch gebremsten Kraftfahrzeugen der eingangs geschildert Art dadurch verbessert wird, dass ein Betätigungsorgan des elektrischen Schaltelements wenigstens teilweise in der Rastnut und radial über dem Nutgrund angeordnet und vom Rastkörper direkt betätigbar ist.

Das Betätigungsorgan ist nun nicht tief im Inneren des Hebelgehäuses vorborgen und mit dem Steuerkörper verbunden, sondern wenigstens teilweise außerhalb des Hebelgehäuses an diesem befestigt. Dies ermöglicht eine einfache und schnelle Montage des Betätigungsorgans. Außerdem wird durch die erfindungsgemäße Anordnung auch eine eventuell notwendige Reparatur erleichtert, da das Betätigungsorgan sehr viel leichter zugänglich ist.

Die Erfindung lässt sich noch dadurch ergänzen, dass vorgesehen ist, dass das Betätigungsorgan des elektrischen Schaltelements eine am Hebelgehäuse schwenkbar gelagerte Wippe ist, deren vorderes Ende in Wirkverbindung mit dem Rastkörper und deren hinteres Ende in Wirkverbindung mit dem Schaltelement steht.

In einer anderen praktischen Weiterbildung der Erfindung ist vorgesehen, dass das elektrische Schaltelement ein Mikroschalter ist, welcher im oder am Hebelgehäuse angeordnet ist.

Besonders praktisch ist eine Ergänzung der Erfindung, welche sich dadurch auszeichnet, dass die Wippe ein Stanzblechteil ist.

In einer besonders bevorzugten Ausgestaltung der Erfindung ist vorgesehen, dass das vordere Ende der Wippe abgewinkelt ist, wobei das abgewinkelte Ende in die Rastnut ragt und wenigstens im unbetätigten Zustand in einem geringen Abstand radial über dem Nutgrund angeordnet ist.

Diese Ausgestaltung lässt ich noch dadurch ergänzen, dass vorgesehen ist, dass die Wippe im Bereich ihrer Schwenkachse auf einem Achsstift gelagert ist. Hierbei kann der Achsstift direkt außen am Hebelgehäuse befestigt sein, beispielsweise durch eine Schraube. Er lässt sich aber auch in einem separaten Gehäuseteil des Betätigungsorgans anordnen.

Besonders ist eine Weiterbildung der Erfindung, die sich dadurch auszeichnet, dass ein Federelement gegen das vordere Ende oder gegen das hintere Ende der Wippe wirkt, so dass die Wippe im unbetätigten Zustand vom Nutgrund und vom elektrischen Schaltelement beabstandet ist.

Dies lässt sich dadurch ergänzen, dass das Federelement eine Schenkelfeder ist, deren Federauge koaxial auf dem Achsstift der Wippe gelagert ist.

Alternativ kann vorgesehen sein, das Federelement eine Schraubendruckfeder ist, welche in einer Sackbohrung im Nutgrund der Rastnut gelagert ist.

Eine besonders praktikable Lösung ergibt sich dadurch, dass wenigstens die Wippe in einem Wippengehäuse angeordnet ist, welches mit dem Hebelgehäuse verbunden ist.

Dies kann noch dadurch ergänzt werden, dass das Wippengehäuse durch eine Rastverbindung mit dem Hebelgehäuse verbunden ist.

Weitere Einzelheiten der Erfindung werden anhand eines Ausführungsbeispiels in der Zeichnung näher erläutert. In der Zeichnung zeigt:
Fig. 1 ein Ausführungsbeispiel des erfindungsgemäßen Handbremsventils in Längschnitt in Teildarstellung,
Fig. 2 das Handbremsventil aus Fig. 1 mit verrastetem Schwenkhebel,
Fig. 3 ein Hebelgehäuse des Handbremsventils aus Figur 1 in perspektivischer Ansicht, und
Figur 4 ein Betätigungsorgan des Handbremsventils zur Verbindung mit dem Hebelgehäuse gemäß Fig. 3 in perspektivischer Ansicht.

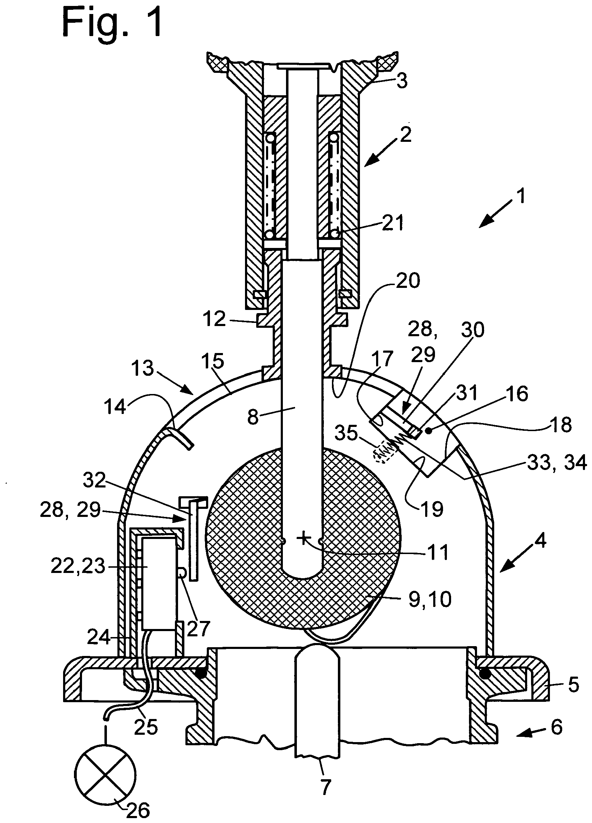

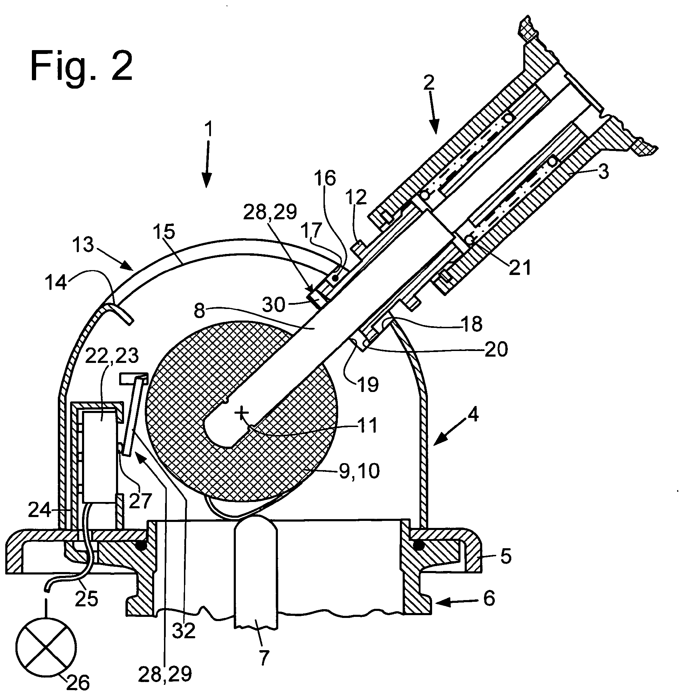

In Fig. 1 und Fig. 2 ist ein Ausführungsbeispiel eines erfindungsgemäßen Handbremsventils 1 im Längsschnitt und in Teildarstellung gezeigt. Das Handbremsventil 1 dient in an sich bekannter Weise dazu, in pneumatisch gebremsten Fahrzeugen bei Erreichen einer Parkposition die Feststellbremse einzulegen bzw. die Feststellbremse wieder zu lösen, wenn eine Fahrt des Fahrzeuges gewünscht wird.

Das Handbremsventil 1 weist im Wesentlichen vier Baugruppen auf, nämlich einen Schwenkhebel 2 mit nur angedeutetem Schaltgriff 3, ein Hebelgehäuse 4, in welchem der Schwenkhebel 2 schwenkbeweglich gelagert ist, einem Befestigungsflansch 5 zum Befestigen des Handbremsventils an einem Armaturenbrett des Fahrzeugs, und ein nur angedeutetes Ventilgehäuse 6.

Das Ventilgehäuse 6 enthält in an sich bekanntere Weise die pneumatischen Komponenten des Handbremsventils 1, auf die es hier jedoch nicht ankommt. Angedeutet in Fig. 1 ist lediglich ein Ventilstößel 7, welcher je nach Schwenkposition des Schwenkhebels 2 durch eine mit einem Schaft 8 des Schwenkhebels 2 starr verbundenen Steuerkörper 9 in Form einer Nockenscheibe 10 betätigbar ist. Der Ventilstößel 7 steht quasi stellvertretend für den gesamten, im Ventilgehäuse 6 angeordneten Handbremsventilmechanismus.

Der Schwenkhebel 2, dessen Schwenkachse mit 11 angedeutet ist, weist einen Rastkörper 12 auf, welcher als Hülse ausgebildet und konzentrisch um den Schaft 8 des Schwenkhebels 2 angeordnet und gegen eine radial außen am Hebelgehäuse 4 angeordnete Schaltkulisse 13 gespannt ist. Die Schaltkulisse 13 weist einen Anschlag 14, eine bogenförmige Gleitbahn 15 und eine Rastnut 16 auf, welche mit Bezug auf die Schwenkachse 11 radial nach innen in die bogenförmige Gleitbahn 15 eingelassen ist. Die Rastnut 16 weist Nutwände 17, 18 und einen Nutgrund 19 auf.

Bei Verschwenkung des Schwenkhebels 2 gleitet das Rastelement 12 mit seiner Unterseite 20 entlang der Gleitbahn 15, und zwar vom Anschlag 14 bis zur Rastnut 16. Die Stellung am Anschlag 14 stellt dabei die Lösestellung des Handbremsventils 1 dar, bei welcher die Feststellbremse gelöst ist. Gleitet das Rastelement 12 über die Gleitbahn 15 hinaus in den Bereich der bzw. über die Rastnut 16, so wird das Rastelement 12 radial nach innen zur Schwenkachse 11 hin in die Rastnut 16 durch eine im Schaltgriff 3 gelagerte Feder 21 gedrückt und schnappt in die Rastnut 16 ein. Der Schwenkhebel 2 ist nun verriegelt. In dieser verriegelten Stellung, welche in Fig. 2 dargestellt ist, ist der Handbremsventilmechanismus ausgelöst, d. h. die Feststellbremsen des Nutzfahrzeugs und gegebenenfalls seines Anhängers sind dauerhaft zugespannt; das Fahrzeug kann nicht mehr rollen.

Um dem Fahrer optisch bzw. gegebenenfalls auch akustisch anzuzeigen, dass der Schwenkhebel seine in Fig. 2 dargstellte verriegelte Stellung eingenommen hat und der Fahrer daher sein Fahrzeug gefahrenfrei verlassen kann, ist ein elektrisches Schaltelement 22 in Form eines Mikroschalters 23 vorgesehen, welcher in einer Kammer 24 des Hebelgehäuses 4 angeordnet ist. Elektrische Leitungen 25 des elektrischen Schaltelements 22 sind mit einem Schaltkreis eines Anzeigemittels in Form einer nur angedeuteten Leuchte 26 verbunden, welche am Armaturenbrett des Fahrzeugs oder am Hebelgehäuse 4 angebracht sein kann. Das Schaltelement 22 weist einen Taster 27 auf. Wird dieser mit Druck beaufschlagt, wird das Schaltelement geschaltet und die Leuchte 26 leuchtet.

Bei bislang bekannten Lösungen des Standes der Technik war das zum Betätigen des Tasters 27 notwendige Betätigungsorgan mit der Nockenscheibe 10 verbunden. Nach der Erfindung ist das Betätigungsorgan 28 des elektrischen Schaltelements 22 wenigstens teilweise in der Rastnut 16 und radial über dem Nutgrund 19 angeordnet und ist vom Rastkörper 12 direkt betätigbar.

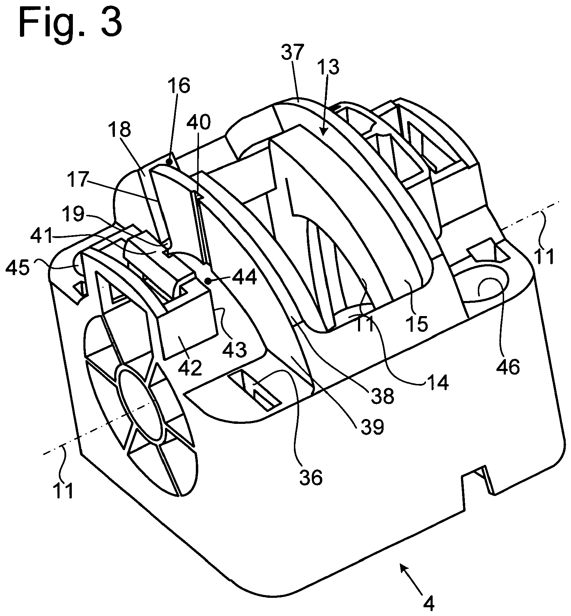

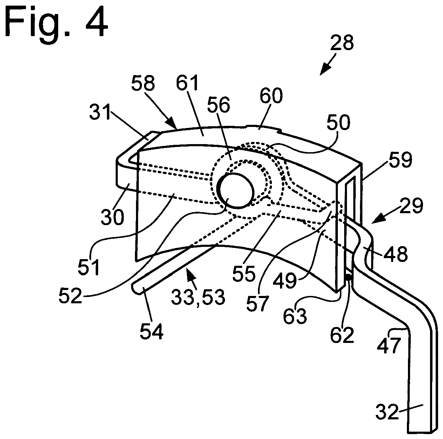

Das Betätigungsorgan 28 ist als Wippe 29 ausgebildet und wird anhand der Figuren 3 und 4 noch näher erläutert werden. In Fig. 1 und 2 ist zu erkennen, dass die Wippe 29 ein vorderes Ende 30 aufweist, welches axial nach innen in das Hebelgehäuse 4 abgewinkelt ist, wobei das abgewinkelte Ende 31 in die Rastnut 16 ragt und wenigstens im unbetätigten Zustand in einem Abstand radial über dem Nutgrund 19 angeordnet ist. Das vordere Ende 30 der Wippe 29 steht also - siehe Fig. 2 - in Wirkverbindung mit dem Rastkörper 12.

Ein hinteres Ende 32 der Wippe 29 steht dagegen in Wirkverbindung mit dem elektrischen Schaltelement 22. Im unbetätigten Zustand - siehe Fig. 1 - ist das hintere Ende 32 der Wippe 29 vom Taster 27 des elektrischen Schaltelements 22 beabstandet.

Wird - siehe Fig. 2 - der Schwenkhebel 2 in die Rasstellung verschwenkt, so dass der Rastkörper 12 in die Rastnut 16 einschnappt, drückt die Unterseite 20 des Rastkörpers 16 das vordere Ende 30 der Wippe 29 nieder. Entsprechend der Abwärtsbewegung des vorderen Endes 30 der Wippe 29 erfährt das hintere Ende 32 der Wippe 29 eine Aufwärtsbewegung und drückt gegen den Taster 27 des elektrischen Schaltelements 22, was zum Aufleuchten der Leuchte 26 führt.

Auf diese Weise ist gewährleistet, dass die Leuchte 27 erst dann aufleuchtet, wenn der Rastkörper 12 vollständig in die Rastnut 16 eingeschnappt und damit eine sichere, erschütterungsfreie Verriegelung des Schwenkhebels 2 gesichert ist.

Um im unverriegelten Zustand den nötigen Abstand des vorderen Endes 30 der Wippe 29 zum Nutgrund 19 sicher zu stellen und um ein ungewolltes Betätigen des Tasters 27 des elektrischen Schaltelements 22 durch das hintere Ende 32 der Wippe 29 sicher zu vermeiden, ist ein Federelement 33 vorgesehen, welches gegen das vordere Ende 30 der Wippe 29 wirkt, so dass die Wippe 29 im unbetätigten Zustand vom Nutgrund 19 beabstandet bleibt. Im Ausführungsbeispiel nach Fig. 1 und 2 ist das Federelement 33 als Schraubendruckfeder 34 ausgebildet, welche in einer Sackbohrung 35 im Nutgrund 19 gelagert ist.

In Fig. 3 ist das Hebelgehäuse 4 des Handbremsventils 1 in perspektivischer Ansicht dargestellt. Das Hebelgehäuse 4 entspricht weitgehend dem Hebelgehäuse der Figuren 1 und 2 und weist ebenfalls eine Schaltkulisse 13 mit Anschlag 14, eine bogenförmige Gleitbahn 15 und eine Rastnut 16 auf, welche mit Bezug auf die Schwenkachse 11 radial nach innen in die bogenförmige Gleitbahn 15 eingelassen ist. Die Rastnut 16 weist ebenfalls Nutwände 17, 18 und einen Nutgrund 19 auf, wobei der Abstand der Nutwände 17, 18 zueinander geringer ist, als bei der Darstellung gemäß Fig. 1 und 2. Entsprechend weist die in Fig. 3 nicht dargestellte Unterseite 20 des Rastkörper 12 eine geringere Fläche auf, damit sie entsprechend in die schmalere Rastnut 16 einschnappen kann.

Ebenso wenig wie der Schwenkhebel 2, der Flansch 5 und das Ventilgehäuse 6 sind in Fig. 3 das Betätigungsorgan 28 und das elektrische Schaltelement 22 nicht dargestellt. Das Betätigungsorgan wird im Zusammenhang mit Fig. 4 beschrieben werden. An wesentlichen Elementen in Fig. 3 sind eine Gehäuseöffnung 36 zu erwähnen, durch welche das hintere Ende 32 der Wippe 29 des Betätigungsorgans 28 in das Hebelgehäuse 4 einführbar ist. Ebenso wesentlich im Zusammenhang mit der Darstellung des Betätigungsorgans gemäß Fig. 4 sind die Gleitbahn 15 axial begrenzende Borde 37, 38, welche radial über die Gleitbahn 15 überstehen. In eine Außenwand 39 des in Fig. 3 linken Bordes 38 ist eine sich im Wesentlichen radial erstreckende Schwalbenschwanznut 40 eingeformt. Die Schwalbenschwanznut 40 dient der Befestigung des Betätigungsorgans 28 gemäß Fig. 4.

Der Schwalbenschwanznut 40 axial gegenüber angeordnet befindet sich ein Schnapphaken 41, welcher ebenfalls der Befestigung des Betätigungsorgans 28 gemäß Fig. 4 dient. Der Schnapphaken 41 ist einstückig an einem Gehäusepfeiler 42 befestigt, wobei eine axiale innere Wand 43 des Gehäusepfeilers 42 parallel und im axialen Abstand zur Außenwand 39 des in Fig. 3 linken Bordes 38 angeordnet ist, so dass einen in Umfangsrichtung des Hebelgehäuses 4 offene Einschubtasche 44 für das Betätigungsorgan 28 gebildet ist.

Im Zusammenhang mit der Erfindung von geringerer Bedeutung, aber dennoch erwähnenswert sind Bohrungen 45, 46, durch welche nicht dargestellte Schraubbolzen geführt sind, welche der Befestigung des Hebelgehäuses 4 am Befestigungsflansch 5 und am Ventilgehäuse 6 dienen. Das Hebelgehäuse 4 ist als einstückiges Kunststoffteil ausgebildet, kann aber auch aus einem anderen Werkstoff bestehen und mehrteilig ausgebildet sein.

In Fig. 4 ist das Betätigungsorgan 28 in perspektivischer Ansicht dargestellt, welches mit dem Hebelgehäuse gemäß Fig. 3 verbindbar ist.

Das als Wippe 29 ausgebildete Betätigungsorgan 28 weist - wie bereits in Zusammenhang mit den Figuren 1 und 2 erläutert - in vorderes Ende 30 auf, welches axial nach innen in Richtung der Rastnut 16 des Hebelgehäuses 4 abgewinkelt ist, wobei das abgewinkelte Ende 31 im montierten Zustand des Betätigungsorgans 28 in die Rastnut 16 ragt und wenigstens im unbetätigten Zustand in einem Abstand radial über dem Nutgrund 19 angeordnet ist. Das vordere Ende 30 der Wippe 29 steht dann in Wirkverbindung mit dem Rastkörper 12.

Das hintere Ende 32 der Wippe 29 steht dagegen in Wirkverbindung mit dem elektrischen Schaltelement 22. Im unbetätigten Zustand - siehe Fig. 1 - ist das hintere Ende 32 der Wippe 29 vom Taster 27 des elektrischen Schaltelements 22 beabstandet. Das hintere Ende 32 ist radial nach innen Richtung Inneres des Hebelgehäuses 4 gerichtet. Vom hinteren Ende 32 ausgehend weist die als Stanzblechteil ausgebildete Wippe 29 eine in etwa rechtwinkelige Abknickung 47, einen sich im Wesentlich axial erstreckenden S-Bogen 48 auf, welcher in einen geraden Bereich oder Schenkel 49 übergeht, welcher sich bis zu einem Drehpunkt mit einem Auge 50 erstreckt. Am Auge 50 ist dann ein das vordere Ende 30 bildender Schenkel 51 angeformt.

Durch das Auge 50 der Wippe 29 ist ein Achsstift 52 geführt; die Wippe 29 kann sich um den Achsstift 52 drehen. Auf dem Achsstift 52 ist außer der Wippe 29 das Federelement 33 gelagert, wobei das Federelement 33 im Gegensatz zum Ausführungsbeispiel nach Fig. 1 nicht als Schraubendruckfeder, sondern als Drehfeder in Form einer einwindigen Schenkelfeder 53 ausgebildet ist. Die Schenkelfeder 53 weist zwei Federarme 54, 55 und ein beide Federarme 54, 55 verbindendes Federauge 56 auf, welches auf dem Achsstift 52 gelagert und in axialer Richtung vor der Wippe 29 angeordnet ist. Während der freie Federarm 54 gegen das Hebelgehäuse 4 gespannt ist, ist der Federarm 55 als Wippenfeder 55 gegen den Schenkel 49 des hinteren Endes 32 der Wippe gespannt, indem ein abgewinkeltes Ende 57 des Federarms 55 auf dem Schenkel 49 aufliegt. Durch diese Anordnung wird das hintere Ende 32 der Wippe 29 nach unten und gleichzeitig das vordere Ende 30 der Wippe 29 nach oben gedrückt.

Die Wippe 29, die Schenkelfeder 53 und der Achsstift 52 sind in einem Wippengehäuse 58 angeordnet. An einer Rückwand 59 des Wippengehäuses 58 ist eine sich im Wesentlichen radial erstreckende Schwalbenschwanz-Leiste 60 angeformt. Zur Befestigung des Wippengehäuses 58 am Hebelgehäuse 4 gemäß Fig. 3 wird die Schwalbenschwanz-Leiste 60 von oben in die Schwalbenschwanznut 40 des Hebelgehäuses 4 eingeschoben. Nachdem das Wippengehäuse 58 vollständig in die Einschubtasche 44 des Hebelgehäuses 4 eingeschoben wurde, schnappt der am Gehäusepfosten 42 des Hebelgehäuses 4 angeformte Schnapphaken 41 über die Oberseite 61 des Wippengehäuses 58, so dass das Wippengehäuse 58 dann am Hebelgehäuse festgelegt ist. Beim Befestigen des Wippengehäuses 58 am Hebelgehäuse 4 wird das abgewinkelte Ende 31 des vorderen Endes 30 der Wippe 29 in die Rastnut 16 eingeschoben, wobei gleichzeitig das hintere Ende 32 der Wippe 29 durch die Gehäuseöffnung 36 des Hebelgehäuses 4 in dieses eingeschoben wird, so dass das hintere Ende 32 der Wippe 29 seine Ruheposition vor dem Taster 27 des elektrischen Schaltelements 22 einnimmt.

Zu Montage von Wippe 29 und Schenkelfeder 53 im Wippengehäuse 58 ist ein Schlitz 62 vorgesehen, welcher längs in die Unterseite 63 des Wippengehäuses 58 eingebracht ist. Durch den Schlitz 62 werden Wippe 29 und Schenkelfeder 53 in das Wippengehäuse 58 eingeschoben, wonach der Achsstift 52 von hinten durch die Rückwand 59 des Wippengehäuses 58 und durch das Auge 50 der Wippe 29 und durch das Federauge 56 der Schenkelfeder 53 gesteckt wird.

### Bezugszeichenliste

- 1: Handbremsventil
- 2: Schwenkhebel
- 3: Schaltgriff
- 4: Hebelgehäuse
- 5: Befestigungsflansch
- 6: Ventilgehäuse
- 7: Ventilstößel
- 8: Schaft
- 9: Steuerkörper
- 10: Nockenscheibe
- 11: Schwenkachse
- 12: Rastkörper
- 13: Schaltkulisse
- 14: Anschlag
- 15: Gleitbahn
- 16: Rastnut
- 17: Nutwand
- 18: Nutwand
- 19: Nutgrund
- 20: Unterseite des Rastelements 12
- 21: Feder
- 22: Schaltelement
- 23: Mikroschalter
- 24: Kammer
- 25: Elektrische Leitung
- 26: Leuchte
- 27: Taster
- 28: Betätigungsorgan
- 29: Wippe
- 30: Vorderes Ende der Wippe 29
- 31: Abgewinkeltes Ende
- 32: Hinteres Ende der Wippe 29
- 33: Federelement
- 34: Schraubendruckfeder
- 35: Sackbohrung
- 36: Gehäuseöffnung
- 37: Bord
- 38: Bord
- 39: Außenseite des Bordes 38
- 40: Schwalbenschwanznut
- 41: Schnapphaken
- 42: Gehäusepfosten
- 43: Wand
- 44: Einschubtasche
- 45: Bohrung
- 46: Bohrung
- 47: Abknickung
- 48: S-Bogen
- 49: Schenkel
- 50: Auge
- 51: Schenkel
- 52: Achsstift
- 53: Schenkelfeder
- 54: Federarm
- 55: Federarm
- 56: Federauge
- 57: Abgewinkeltes Ende des Federarms 55
- 58: Wippengehäuse
- 59: Rückwand
- 60: Schwalbenschwanz-Leiste
- 61: Oberseite
- 62: Schlitz
- 63: Unterseite

## Patentansprüche

1. Handbremsventil (1) für Bremsanlagen von pneumatisch gebremsten Kraftfahrzeugen, mit einem in einem Hebelgehäuse (4) schwenkbar geführten, mit einem Steuerkörper (9, 10) zur Betätigung des Handbremsventilmechanismus (7) verbundenen, einen Schaltgriff (3) tragenden Kipphebel (2), welcher unter Führung einer Schaltkulisse (13) in unterschiedliche Wirkpositionen verschwenkbar ist, wobei der Kipphebel (2) einen mit der Schaltkulisse (13) zusammenwirkenden Rastkörper (12) aufweist, welcher entlang einer bogenförmigen Gleitbahn (15) der Schaltkulisse (13) gleitet, wobei radial in die bogenförmige Gleitbahn (15) eine Rastnut (16) mit Nutwänden (17, 18) und Nutgrund (19) eingelassen ist, in welche der Rastkörper (12) in verriegelter Stellung einschnappt, und wobei das Handbremsventil (1) ein elektrisches Schaltelement (22) aufweist, welche ausschließlich in der verriegelten Stellung des Rastkörpers (12) in der Rastnut (16) betätigbar ist, **dadurch gekennzeichnet, dass** ein Betätigungsorgan (28) des elektrischen Schaltelements (22) wenigstens teilweise in der Rastnut (16) und radial über dem Nutgrund (19) angeordnet und vom Rastkörper (12) direkt betätigbar ist.

2. Handbremsventil nach Anspruch 1, **dadurch gekennzeichnet, dass** das Betätigungsorgan (28) des elektrischen Schaltelements (22) eine am Hebelgehäuse (4) schwenkbar gelagerte Wippe (29) ist, deren vorderes Ende (30, 31) in Wirkverbindung mit dem Rastkörper (12) und deren hinteres Ende (32) in Wirkverbindung mit dem Schaltelement (22) steht.

3. Handbremsventil nach Anspruch 1 oder 2, **dadurch gekennzeichnet, dass** das elektrische Schaltelement (22) ein Mikroschalter (23) ist, welcher im oder am Hebelgehäuse (4) angeordnet ist.

4. Handbremsventil wenigstens nach Anspruch 2, **dadurch gekennzeichnet, dass** die Wippe (29) ein Stanzblechteil ist.

5. Handbremsventil nach Anspruch 2, **dadurch gekennzeichnet, dass** das vordere Ende (30) der Wippe (29) abgewinkelt ist, wobei das abgewinkelte Ende (31) in die Rastnut (16) ragt und wenigstens im unbetätigten Zustand in einem geringen Abstand radial über dem Nutgrund (19) angeordnet ist.

6. Handbremsventil wenigstens nach Anspruch 2, **dadurch gekennzeichnet, dass** die Wippe (29) im Bereich ihrer Schwenkachse (50) auf einem Achsstift (52) gelagert ist.

7. Handbremsventil wenigstens nach Anspruch 2, **dadurch gekennzeichnet, dass** ein Federelement (33; 34; 53) gegen das vordere Ende (30; 31) oder gegen das hintere Ende (32; 48; 49) der Wippe (29) wirkt, so dass die Wippe (29) im unbetätigten Zustand vom Nutgrund (19) und vom elektrischen Schaltelement (22) beabstandet ist.

8. Handbremsventil wenigstens nach Anspruch 6, **dadurch gekennzeichnet, dass** das Federelement (33) eine Schenkelfeder (53) ist, deren Federauge (56) koaxial auf dem Achsstift (52) der Wippe (29) gelagert ist.

9. Handbremsventil nach Anspruch 6, **dadurch gekennzeichnet, dass** das Federelement (33) eine Schraubendruckfeder (34) ist, welche in einer Sackbohrung (35) im Nutgrund (19) der Rastnut (16) gelagert ist.

10. Handbremsventil wenigstens nach Anspruch 2, **dadurch gekennzeichnet, dass** wenigstens die Wippe (29) in einem Wippengehäuse (58) angeordnet ist, welches mit dem Hebelgehäuse (4) verbunden ist.

11. Handbremsventil nach Anspruch 10, **dadurch gekennzeichnet, dass** das Wippengehäuse (58) durch eine Rastverbindung (40, 60, 41) mit dem Hebelgehäuse (4) verbunden ist.

## Claims

1. Hand brake valve (1) for braking systems of pneumatically braked motor vehicles, comprising a rocking lever (2) which is pivotably guided in a lever housing (4), which is connected to a control element (9, 10) for actuating the hand brake valve mechanism (7) and which bears a shift handle (3), and which is able to be pivoted into different operating positions by being guided in a shift gate (13), wherein the rocking lever (2) comprises a locking element (12) which cooperates with the shift gate (13) and which slides along a curved sliding path (15) of the shift gate (13), wherein a locking groove (16) with groove walls (17, 18) and a groove base (19) is radially formed in the curved sliding path (15), the locking element (12) being snapped into said locking groove in the locked position, and wherein the hand brake valve (1) comprises an electrical switching element (22) which is able to be actuated exclusively in the locked position of the locking element (12) in the locking groove (16), **characterized in that** an actuating member (28) of the electrical switching element (22) is arranged at least partially in the locking groove (16) and radially above the groove base (19) and is able to be directly actuated by the locking element (12).

2. Hand brake valve according to Claim 1, **characterized in that** the actuating member (28) of the electrical switching element (22) is a rocker (29) pivotably mounted on the lever housing (4), the front end (30, 31) thereof being operatively connected to the locking element (12) and the rear end (32) thereof being operatively connected to the switching element (22).

3. Hand brake valve according to Claim 1 or 2, **characterized in that** the electrical switching element (22) is a micro-switch (23) which is arranged in or on the lever housing (4).

4. Hand brake valve at least according to Claim 2, **characterized in that** the rocker (29) is a stamped sheet metal part.

5. Hand brake valve according to Claim 2, **characterized in that** the front end (30) of the rocker (29) is angled back, wherein the angled-back end (31) protrudes into the locking groove (16) and at least in the unactuated state is arranged at a short distance radially above the groove base (19).

6. Hand brake valve at least according to Claim 2, **characterized in that** the rocker (29) is mounted on an axial pin (52) in the region of its pivot axis (50).

7. Hand brake valve at least according to Claim 2, **characterized in that** a spring element (33; 34; 53) acts against the front end (30; 31) or against the rear end (32; 48; 49) of the rocker (29) so that the rocker (29) in the unactuated state is spaced apart from the groove base (19) and from the electrical switching element (22).

8. Hand brake valve at least according to Claim 6, **characterized in that** the spring element (33) is a leg spring (53), the spring eye (56) thereof being mounted coaxially on the axial pin (52) of the rocker (29).

9. Hand brake valve according to Claim 6, **characterized in that** the spring element (33) is a helical compression spring (34) which is mounted in a blind bore (35) in the groove base (19) of the locking groove (16).

10. Hand brake valve at least according to Claim 2, **characterized in that** the rocker (29) is arranged in a rocker housing (58) which is connected to the lever housing (4).

11. Hand brake valve according to Claim 10, **characterized in that** the rocker housing (58) is connected to the lever housing (4) by a locking connection (40, 60, 41).

## Revendications

1. Vanne de frein à main (1) pour des systèmes de freinage de véhicules à moteur à freinage pneumatique, avec un levier basculant (2) à guidage par pivotement qui se trouve dans un carter de levier (4) et qui supporte une poignée de commutation (3), ledit levier basculant étant raccordé à un corps de commande (9, 10), en vue d'actionner le mécanisme de la vanne de frein à main (7), et pouvant pivoter dans différentes positions actives sous la direction d'une coulisse de commutation (13), lequel levier basculant (2) présente un corps à cran (12) qui interagit avec la coulisse de commutation (13) et qui glisse le long d'une glissière (15) incurvée de la coulisse de commutation (13), où une gorge à cran (16), laquelle présente des parois de gorge (17, 18) et un fond de gorge (19), est intégrée de manière radiale dans la glissière (15) incurvée, gorge à cran (16) dans laquelle le corps à cran (12) vient s'encliqueter en position verrouillée, et où la vanne de frein à main (1) présente un élément de commutation (22) électrique qui peut exclusivement être actionné dans la gorge à cran (16), dans la position verrouillée du corps à cran (12),
**caractérisée en ce qu'**un organe de manoeuvre (28) de l'élément de commutation (22) électrique est disposé, tout au moins en partie, dans la gorge à cran (16) et positionné de manière radiale au-dessus du fond de la gorge (19), ledit organe de manoeuvre pouvant être actionné directement par le corps à cran (12).

2. Vanne de frein à main selon la revendication 1, **caractérisée en ce que** l'organe de manoeuvre (28) de l'élément de commutation (22) électrique est une bascule (29) logée dans le carter de levier (4) de manière à pouvoir pivoter et dont l'extrémité (30, 31) avant se trouve en liaison active avec le corps à cran (12) et dont l'extrémité (32) arrière se trouve en liaison active avec l'élément de commutation (22).

3. Vanne de frein à main selon la revendication 1 ou 2, **caractérisée en ce que** l'élément de commutation (22) électrique est un micro-commutateur (23) qui est disposé dans le carter de levier (4) ou au niveau du carter de levier.

4. Vanne de frein à main tout au moins selon la revendication 2, **caractérisée en ce que** la bascule (29) est une pièce en tôle d'estampage.

5. Vanne de frein à main selon la revendication 2, **caractérisée en ce que** l'extrémité (30) avant de la bascule (29) forme un angle et où l'extrémité (31) en angle pénètre dans la gorge à cran (16) et est disposée, tout au moins à l'état non actionné, de manière radiale et légèrement espacée au-dessus du fond de la gorge (19).

6. Vanne de frein à main tout au moins selon la revendication 2, **caractérisée en ce que** la bascule (29) est logée sur une tige de pivot de l'axe (52), dans la zone de son axe de pivotement (50).

7. Vanne de frein à main tout au moins selon la revendication 2, **caractérisée en ce qu'**un élément de ressort (33 ; 34 ; 53) agit contre l'extrémité (30 ; 31) avant ou contre l'extrémité (32 ; 48 ; 49) arrière de la bascule (29), de telle sorte que la bascule (29) se trouve, à l'état non actionné, à une certaine distance du fond de la gorge (19) et de l'élément de commutation (22) électrique.

8. Vanne de frein à main tout au moins selon la revendication 6, **caractérisée en ce que** l'élément de ressort (33) est un ressort à bras (53), dont l'oeillet de ressort (56) est logé de manière coaxiale sur la tige de pivot de l'axe (52) de la bascule (29).

9. Vanne de frein à main selon la revendication 6, **caractérisée en ce que** l'élément de ressort (33) est un ressort hélicoïdal de compression (34) qui est logé dans un trou borgne (35), dans le fond de la gorge (19) de la gorge à cran (16).

10. Vanne de frein à main tout au moins selon la revendication 2, **caractérisée en ce que** tout au moins la bascule (29) est disposée dans un carter pour la bascule (58) qui est relié au carter de levier (4).

11. Vanne de frein à main selon la revendication 10, **caractérisée en ce que** le carter pour la bascule (58) est relié au carter de levier (4) par l'intermédiaire d'une jonction par encliquetage (40, 60, 41).
